# FASCICULE DE BREVET EUROPEEN

(11) **EP 0 501 898 B1**
(45) Date de publication et mention de la délivrance du brevet: **03.05.1995**
(21) Numéro de dépôt: 92420061.1
(22) Date de dépôt: 28.02.1992
(51) Int. Cl.: B60D 1/06

(54) **Attelage à rotule pour remorque**
Kugelkopf-Anhängerkupplung
Ball-and-socket hitch for trailer

(30) Priorité: 01.03.1991 FR 9102693
(43) Date de publication de la demande: 02.09.1992
(73) Titulaire: SOCIETE "IMMEDIAT", F-69400 Villefranche-sur-Saône (FR)
(72) Inventeur: Dumas, Alain, F-69880 Jonage (FR)
(74) Mandataire: Karmin, Roger

(56) Documents cités:
- DE-A- 2 245 087
- FR-A- 2 427 214
- GB-A- 2 087 817
- US-A- 2 170 980
- US-A- 2 855 222
- US-A- 3 009 714
- US-A- 3 567 253

## Description

La présente invention a trait à un attelage à rotule comportant un dispositif de verrouillage à enclenchement automatique du timon de la remorque par rapport à une rotule solidaire de l'engin de traction.

On connaît des attelages de ce genre qui sont décrits dans le brevet francais FR-A-2 463 688 et qui comprennent généralement un corps principal obtenu par emboutissage à froid d'une tôle, de manière à réaliser deux parties distinctes.

La première partie est réalisée en forme de U renversé dont le fond est percé d'au moins deux trous pour la fixation du corps sur le timon de la remorque. La seconde partie présente un profil en forme de cuvette sphérique permettant la mise en place de la rotule.

A l'intérieur du corps et à proximité de la cuvette sphérique est prévu un dispositif de verrouillage comportant un sabot articulé qui est entraîné en pivotement autour de son axe par l'intermédiaire d'une poignée chargée élastiquement. Le verrouillage du sabot, une fois la rotule introduite dans l'espace libre déterminé entre la cuvette sphérique et le sabot, est uniquement réalisé par la réaction du ressort.

Un tel dispositif de verrouillage comporte l'inconvénient de nécessiter un effort important de la part de l'utilisateur pour libérer axialement le sabot et le maintenir dans cette position en vue de l'introduction de la rotule.

On connaît aussi des attelages qui sont décrits dans le brevet américain US-A-2 855 222 et qui comprennent un sabot articulé autour d'un axe horizontal sur lequel sont enroulés au moins deux ressorts de compression de manière à soumettre une résistance audit sabot. L'un au moins des ressorts prend appui par l'une de ses extrémités sur une came qui est solidaire de deux tiges verticales. Les tiges verticales débouchent en dehors du corps de l'attelage pour coopérer au moyen de vis et d'écrous avec une poignée de manutention.

Le verrouillage de la rotule appartenant au timon à l'intérieur de l'espace sphérique du corps de l'attelage est réalisé par coincement de la came contre le sabot articulé et une butée fixe. Le verrouillage est amélioré par la compression des ressorts sur la came.

Un tel attelage de remorque comporte certains inconvénients en ce qui concerne l'efficacité du verrouillage, étant donné que des vibrations suffisent à dégager la came et donc à libérer la rotule. De plus, on peut remarquer qu'il n'est prévu aucune goupille de sécurité pour éviter le déverrouillage. En outre, si la rotule est prévue d'un diamètre trop fort, on risque de ne jamais verrouiller la came entre le sabot et la butée.

La présente invention vise à remédier à ces inconvénients et à permettre la réalisation d'un attelage pour remorque comportant un dispositif de verrouillage entièrement automatique sans intervention manuelle.

A cet effet, un attelage à rotule selon la revendication 1 en entier est revendiqué.

Le dessin annexé, donné à titre d'exemple, permettra de mieux comprendre l'invention, les caractéristiques qu'elle présente et les avantages qu'elle est susceptible de procurer :
Fig. 1 est une vue en perspective illustrant l'attelage à rotule suivant la présente invention.
Fig. 2 est une coupe longitudinale partielle montrant l'attelage à rotule de fig. 1 en position déverrouillée.
Fig. 3 est une coupe longitudinale partielle semblable à celle de fig. 2, mais représentant l'attelage à rotule en position verrouillée.
Fig. 4 est une coupe sensiblement horizontale suivant IV-IV de fig. 3.

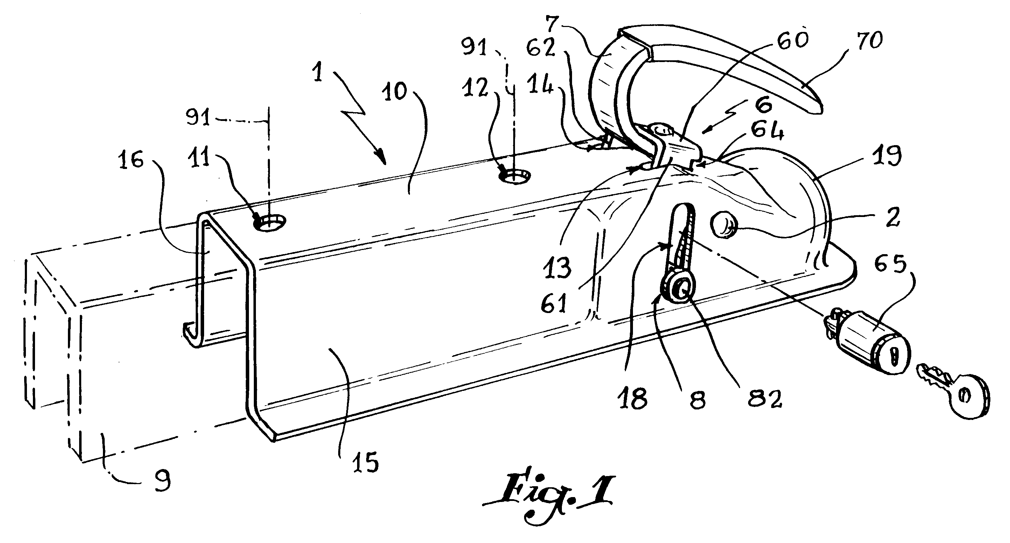

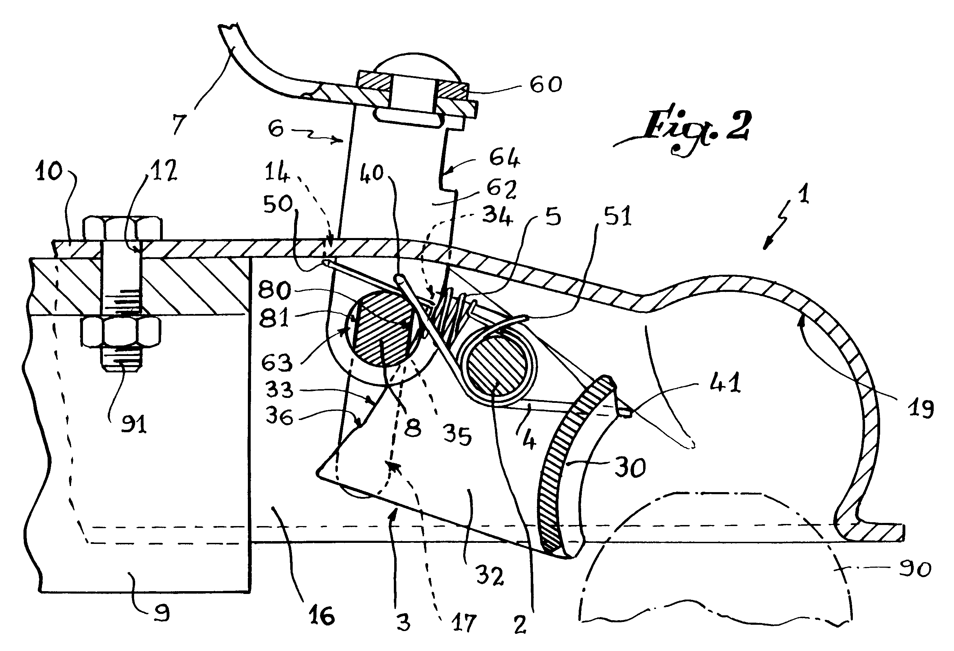

L'attelage suivant l'invention représenté en fig. 1 et 2 comprend un corps 1 réalisé dans un flan de tôle embouti à froid. Le corps 1 présente une première partie en forme de U renversé dont le fond 10 est percé de deux trous 11 et 12 et de deux fentes 13, 14. Les branches du U formant les parois latérales 15 et 16 du corps 1 sont pourvues de deux ouvertures oblongues 17 et 18 sensiblement verticales. La seconde partie du corps 1 constitue une cuvette en forme de portion sphérique 19 permettant la mise en place d'une rotule 90 connue en soi et solidaire de l'engin de traction comme on le verra mieux plus loin.

Il est prévu entre les ouvertures oblongues 17 et 18 et la cuvette sphérique 19 un axe horizontal 2 traversant de part en part le corps 1. Sur cet axe est monté à pivotement un sabot 3 obtenu dans une tôle formée à froid de manière à présenter d'une part un profil concave 30 tourné du côté de la cuvette sphérique 19 et d'autre part deux faces parallèles 31 et 32 dirigées à l'opposé de ladite cuvette. Les bords extrêmes des deux faces parallèles 31, 32 sont découpés en escalier, de façon à obtenir deux pans inclinés 33 et 34 décalés l'un par rapport à l'autre et déterminant entre eux une came de blocage 35 dont on expliquera mieux plus loin le rôle. Le pan incliné 33 des deux faces parallèles 31 et 32 et plus particulièrement son extrémité opposée à la came 35 est prévu d'une inclinaison différente de manière à former une butée 36.

Entre les deux faces 31 et 32 du sabot 3 et autour de l'axe horizontal 2 est monté un ressort de torsion 4.

Les fentes 13 et 14 sont traversées par les branches d'une chape 6 en forme de U renversé dont le fond 60 se trouve au-dessus de celui du corps 1. Le fond 60 est solidaire d'une poignée 7 de préhension qui est pratiquement recouverte sur la totalité de sa surface d'une protection en plastique 70. Les ailes latérales 61 et 62 de la chape 6 sont percées à leur extrémité libre d'un alésage 63. Au-dessus de cet alésage et à proximité du fond 60, les ailes latérales 61 et 62 sont découpées pour former une encoche 64 qui coopère avec les fentes 13 et 14. Sur l'une des ailes latérales de la chape 6 et préférablement celle référencée 62, vient s'accrocher l'une des extrémités 50 d'un ressort 5, tandis que l'autre extrémité 51 est solidaire de l'axe horizontal 2. Le ressort 5 permet de charger élastiquement la chape 6 de manière que l'encoche 64 des ailes latérales 61 et 62 soit toujours en appui sur l'extrémité des fentes 13 et 14 se trouvant du côté de la cuvette sphérique 19 lorsque l'attelage se trouve en position de verrouillage, comme on le verra mieux plus loin.

Un doigt de verrouillage 8 comportant deux méplats 80 et 81 diamétralement opposés est placé dans les ouvertures oblongues 17 et 18 en vue de traverser l'alésage 63 de la chape 6. Les méplats 80 et 81 permettent d'immobiliser en rotation le doigt de verrouillage à l'intérieur des ouvertures oblongues 17 et 18, tandis que ses extrémités 82 et 83 sont épanouies en vue de son maintien longitudinal par rapport au corps 1. On remarque que l'extrémité 50 du ressort 5 se trouve au-dessus du doigt de verrouillage 8 pour ne pas géner le fonctionnement de l'attelage.

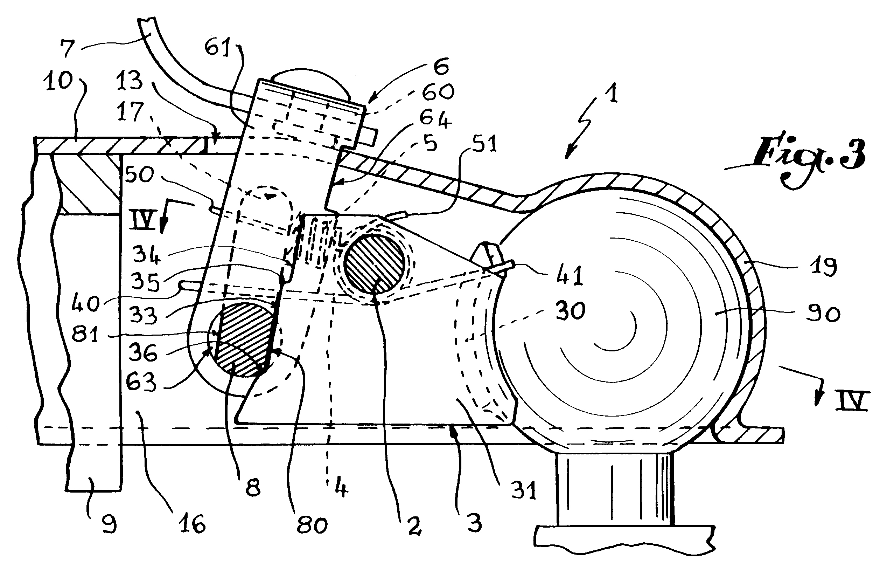

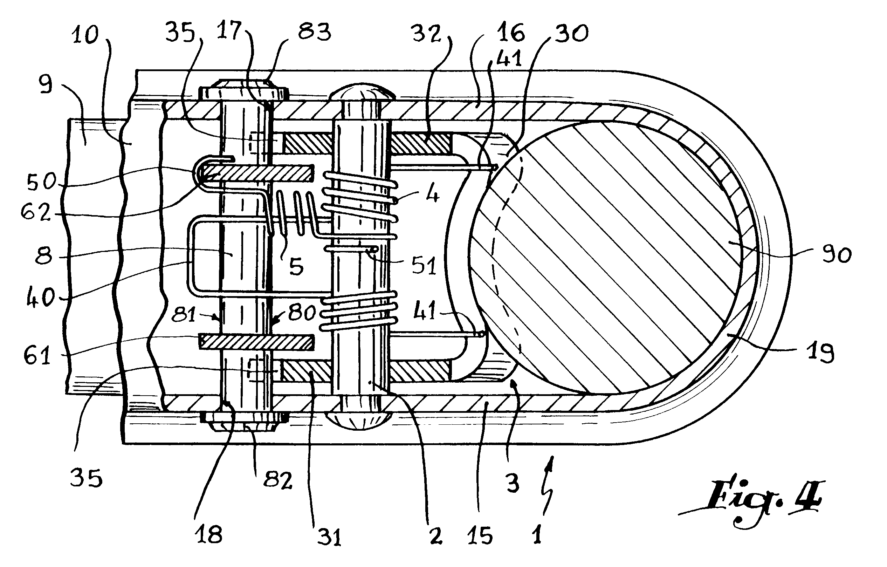

L'une des extrémités 40 du ressort 4 est placée au-dessus et en contact avec le doigt de verrouillage 8, alors que son extrémité opposée 41 est en appui contre la partie supérieure du sabot 3, comme représenté en fig. 3 et 4. La mise en place du ressort 4 permet de charger élastiquement le sabot 3 par rapport au déplacement vertical de la chape 6 par l'intermédiaire de la poignée 7, comme on le verra mieux plus loin. On constate que l'on peut introduire dans l'une des ouvertures oblongues 17 et 18 un verrou à clef 65 qui permet de verrouiller l'attelage à remorque une fois la rotule 90 introduite dans l'espace sphérique 19.

On fixe bien entendu à la manière connue le corps 1 au moyen de vis 91 sur le timon 9 d'une remorque (fig. 2).

Le fonctionnement de l'attelage à rotule découle des explications qui précèdent.

Pour assembler le corps à la rotule 90, l'utilisateur procède de la manière suivante :
- Il enlève le verrou à clef 65 de l'ouverture oblongue (18) (fig. 1).
- Il bascule vers l'arrière la poignée 7 solidaire de la chape 6, à l'intérieur des fentes 13 et 14 à l'encontre du ressort 5 pour dégager les encoches 64 des ailes latérales 61 et 62 du corps 1 de l'attelage.
- Il tire verticalement d'un coup sec la poignée 7 vers le haut, provoquant ainsi au moyen de la chape 6 d'une part le déplacement du doigt de verrouillage 8 à l'intérieur des ouvertures oblongues 17 et 18 et d'autre part la compression du ressort 4 et le basculement du sabot 3 vers le bas. Cette position est maintenue par le doigt de verrouillage 8 qui se trouve en appui contre la came 35 formée par les pans inclinés 33 et 34 (fig. 2).
- Il amène la cuvette 19 du corps 1 au-dessus de la rotule 90 de l'engin de traction (fig. 2).
- Il descend le corps 1 de manière à d'abord amener le sabot 3 contre la rotule 9. Puis, en poursuivant le mouvement, le sabot est repoussé par cette rotule jusqu'à ce que le doigt de verrouillage 8 revienne en appui contre la butée 36 du pan incliné 33 et ceci grâce au ressort 4. On remarque alors que la rotule 90 se trouve emprisonnée dans l'espace libre formé par la cuvette 19 et le sabot 3. La poignée 7, par l'intermédiaire de la chape 6, de l'aile latérale 62 et du ressort 5, est ramenée en avant de manière que les encoches 64 prennent appui contre les extrémités des fentes 13 et 14 se trouvant du côté de la cuvette 19 en vue de verrouiller la rotule 90 à l'intérieur de l'attelage (fig. 3).
- Il introduit un verrou à clef 65 dans l'une des ouvertures oblongues 17, 18 et au dessus du doigt de verrouillage 8 comme moyen de sécurité pour bloquer tous les déplacements de la poignée 7 à l'intérieur du corps 1.

Pour déverrouiller l'attelage à rotule, l'opérateur doit d'abord retirer le verrou 65, puis basculer vers l'arrière la poignée 7 et tirer d'un coup sec celle-ci vers le haut pour dégager ainsi la rotule 90 du corps 1.

On note que les pans inclinés 33 et 34 permettent un rattrapage des jeux lorsque la rotule 90 est d'un diamètre inférieur à la moyenne.

## Revendications

1. Attelage à rotule à enclenchement automatique du genre comprenant un corps (1) obtenu par emboutissage à froid d'un flan de tôle de manière à obtenir d'une part une cuvette sphérique (19) pour l'emplacement d'une rotule (90) et d'autre part un profilé en U renversé pour la fixation dudit corps avec le timon (9) d'une remorque, le fond (10) dudit corps (1) étant percé à proximité de la cuvette sphérique (19) de deux fentes parallèles (13, 14), tandis que les parois latérales (15, 16) dudit corps sont pourvues de deux ouvertures oblongues (17, 18) sensiblement verticales ; ledit attelage comprenant :
- un sabot (3) articulé autour d'un axe horizontal (2) et chargé élastiquement, comprenant une face concave (30) tournée du côté de ladite cuvette (19) et des faces latérales parallèles (31, 32) dont les bords extrêmes sont découpés en escalier pour déterminer deux pans inclinés (33, 34) décalés l'un par rapport à l'autre pour former une came de blocage (35), tandis que le pan incliné (33) des faces (31, 32) et plus particulièrement son extrémité opposée à la came (35) est prévu d'une inclinaison différente de façon à former une butée (36) ;
- une poignée (7) solidaire d'une chape (6) chargée élastiquement et qui comporte des ailes latérales (61, 62) qui coopérent avec les fentes (13, 14) de manière à venir déboucher à l'intérieur du corps (1), tandis que lesdites ailes sont percées à leurs extrémités libres d'un alésage (63) pour le passage d'un doigt de verrouillage (8) qui est guidé axialement dans lesdites ouvertures oblongues (17, 18).

2. Attelage suivant la revendication 1, caractérisé en ce qu'un ressort (4) est centré sur l'axe (2) entre les faces latérales (31, 32) afin que son extrémité (40) soit en appui sur le doigt de verrouillage (8), tandis que son extrémité opposée (41) soit plaquée contre le bord supérieur du sabot (3).

3. Attelage suivant la revendication 1, caractérisé en ce qu'un ressort de rappel (5) vient s'accrocher d'une part sur l'aile latérale (62) et au-dessus du doigt de verrouillage 8 de la chape (6) et d'autre part sur l'axe horizontal (2).

4. Attelage suivant la revendication 1, caractérisé en ce que les ailes latérales (61, 62) sont découpées à proximité du fond (60) par des encoches (64) qui permettent le verrouillage de la rotule (90) à l'intérieur de la cuvette sphérique (19).

5. Attelage suivant la revendication 1, caractérisé en ce que le doigt de verrouillage (8) comporte deux méplats (80, 81) diamétralement opposés.

6. Attelage suivant les revendications 1 et 2, caractérisé en ce que le fond (60) de la chape (6) se trouve au-dessus du fond (10) du corps (1).

7. Attelage suivant la revendication 1, caractérisé en ce qu'un verrou à clef (65) est introduit dans l'une des ouvertures oblongues (17, 18) au-dessus du doigt de verrouillage (8) en vue de bloquer définitivement la poignée (7) à l'intérieur du corps (1).

## Claims

1. An automatically-locking ball-and-socket coupling of the type comprising a body (1) obtained by cold-shaping a sheet metal blank so as to obtain firstly a spherical cup (19) for locating a ball (90) and secondly an inverted U-shaped profile for fixing said body to the drawbar (9) of a trailer, the base (10) of said body (1) being pierced close to the spherical cup (19) by two parallel slots (13, 14), whilst the side walls (15, 16) of said body are provided with two substantially vertical oblong openings (17, 18); said coupling comprising:
- a shoe (3) articulated about a horizontal spindle (2) and elastically loaded, comprising a concave face (30) turned towards said cup (19) and parallel lateral faces (31, 32), the far edges of which are cut in steps to produce two inclined sections (33, 34) offset with respect to each other to form a blocking cam (35), whilst the inclined section (33) of the faces (31, 32) and more particularly its end opposite the cam (35) is provided with a different inclination so as to form a stop (36);
- a handle (7) integral with an elastically loaded cap (6) and comprising lateral wings (61, 62) which cooperate with the slots (13, 14) so as to open into the interior of the body (1), whilst said wings are pierced at their free ends by a bore (63) for a catch finger (8) to pass through, which finger is guided axially in said oblong openings (17, 18).

2. A coupling according to Claim 1, characterised in that a spring (4) is centred on the spindle (2) between the lateral faces (31, 32) so that its end (40) bears on the catch finger (8), whilst its opposite end (41) is placed against the upper edge of the shoe (3).

3. A coupling according to Claim 1, characterised in that a return spring (5) hooks firstly on the lateral wing (62) and above the catch finger (8) of the cap (6) and secondly on the horizontal spindle (2).

4. A coupling according to Claim 1, characterised in that the lateral wings (61, 62) are cut into close to the base (60) by notches (64) which permit the locking of the ball (90) inside the spherical cup (19).

5. A coupling according to Claim 1, characterised in that the catch finger (8) comprises two diametrically opposed flat surfaces (80, 81).

6. A coupling according to Claims 1 and 2, characterised in that the base (60) of the cap (6) is located above the base (10) of the body (1).

7. A coupling according to Claim 1, characterised in that a key-operated bolt (65) is introduced into one of the oblong openings (17, 18) above the catch finger (8) in order to lock the handle (7) permanently inside the body (1).

## Patentansprüche

1. Kugelkopfkupplung zum automatischen Einklinken mit einem aus einem Blechzuschnitt durch Kaltiefziehen erhaltenen Körper (1), der einerseits aus einer Kugelkalotte (19) zum Anordnen eines Kugelkopfes (90) und andererseits aus einem umgekehrten U-Profil zur Befestigung des Körpers an der Deichsel (9) eines Anhängers besteht, wobei der Rücken des Körpers (1) in der Nähe der Kugelkalotte (19) mit zwei parallelen Schlitzen (13,14) durchbrochen ist, während die Seitenwände (15,16) des Körpers mit zwei im wesentlichen senkrechten Langlöchern (17,18) versehen sind, wobei die Kupplung enthält;
- einen um eine horizontale Achse (2) schwenkbaren und elastisch vorgespanntan Schuh (3), der eine zur Seite der Kalotte (19) gerichtete konkave Stirnfläche (30) und parallele Seitenflächen (31,32) umfaßt, deren äußerste Ränder stufenartig ausgeschnitten sind, um zwei zueinander versetzte geneigte Flächen (33,34) zu bestimmen, um zwei Verriegelungsnocken (35) zu bilden, während die geneigte Fläche (33) der Seitenflächen (31,32) und insbesondere ihre dem Nocken (35) entgegengesetztes Ende mit einer unterschiedlichen Neigung zur Bildung eines Anschlags (36) versehen ist;
- einen fest mit einem elastisch vorgespannten Bügel m(6) verbundenen Griff (7), wobei der Bügel (6) Seitenschenkel (61,62) aufweist, die mit den Schlitzen (13,14) derart zusammenarbeiten, daß sie ins Innere des Körpers (1) reichen, während die Schenkel in ihren freien Enden mit einer Bohrung (63) für den Durchgang eines Verriegelungsfingers (8) versehen sind, der axial in den Langlöchern (17,18) geführt ist.

2. Kupplung nach Anspruch 1, dadurch gekennzeichnet, daß eine Feder (4) auf der Achse (2) zwischen den Seitenflächen (31,32) zentriert ist, damit ihr Ende (40) sich gegen den Verriegelungsfinger (8) abstützt, während ihr entgegengesetztes Ende (41) gegen den oberen Rand des Schuhs (3) drückt.

3. Kupplung nach Anspruch 1, dadurch gekennzeichnet, daß eine Zugfeder (5) sich einerseits an dem Seitenschenkel (62) und über dem Verriegelungsfinger (8) des Bügels (6) und andererseits an der horizontalen Achse (2) einhängt.

4. Kupplung nach Anspruch 1, dadurch gekennzeichnet, daß die Seitenschenkel (61,62) in der Nähe des Rückens (60) mit Einschnitten (64) versehen sind, die eine Verriegelung des Kugelkopfes (90) im Innern der Kugelkalotte (19) erlauben.

5. Kupplung nach Anspruch 1, dadurch gekennzeichnet, daß der Verriegelungsfinger (8) zwei diametral entgegengesetzt angeordnete Abflachungen (80,81) aufweist.

6. Kupplung nach Anspruch 1 oder 2, dadurch gekennzeichnet, daß der Rücken (60) des Bügels (6) sich über dem Rücken (10) des Körpers (1) befindet.

7. Kupplung nach Anspruch 1, dadurch gekennzeichnet, daß ein Schlüsselschloß (65) in einer der Langlöcher (17,18) über dem Verriegelungsfinger (8) eingesetzt ist, um endgültig den Griff (7) im Inneren des Körpers (1) zu blockieren.
